# EUROPÄISCHE PATENTANMELDUNG

(11) **EP 2 581 688 A2**
(43) Veröffentlichungstag der Anmeldung: **17.04.2013**
(21) Anmeldenummer: 12006756.6
(22) Anmeldetag: 11.11.2008
(51) Int. Cl.: F24J 2/52, F24J 2/46

(54) **Träger zum Montieren eines Solarpaneels**

(62) Teilanmeldung aus: 08019706.4
(71) Anmelder: Renusol GmbH, 51105 Köln (DE)
(72) Erfinder: Gerling, Loois, 5283 HG Boxtel (NL); Kübsch, Michael, 16321 Bernau (DE); Zschoch, Stefan, 10367 Berlin (DE)
(74) Vertreter: Graf von Stosch, Andreas

(57) **Zusammenfassung**

Die Erfindung bezieht sich auf einen Träger (1) zum Montieren eines Solarpaneels (S), mit einem Unterteil (10) zum Aufstellen auf einem im Wesentlichen flachen Untergrund, insbesondere auf einem Dach; mehreren Wänden (20), die sich vom Unterteil (10) nach oben erstrecken, an deren oberen, dem Unterteil entgegen gesetzten Seiten mehrere Stützflächen (26, 28) zum Auflegen des Solarpaneels (S) vorgesehen sind; und Befestigungsmitteln (33, 40) zum Befestigen des Solarpaneels auf den Stützflächen, wobei die Befestigungsmittel das Solarpaneel (S) gegen die Stützflächen (26, 28) klemmen. Bevorzugt umfassen die Befestigungsmittel (33, 40) mindestens eine Klemmschiene (40), die an einem seitlichen Rand des auf den Stützflächen (26, 28) aufliegenden Solarpaneels (S) angebracht ist, und sich über mindestens die Hälfte, bevorzugt mindestens drei viertel, der länglichen Abmessung des seitlichen Randes des Solarpaneels erstreckt. Die Wände (20) des Trägers (1) weisen vorzugsweise Mittel zur Montage einer zwischen den Wänden (20) einsetzbaren Versteifung (60) auf.

## Beschreibung

Die Erfindung bezieht sich auf einen Träger zum Stützen bzw. Montieren eines Solarpaneels auf einem Dach, wie zum Beispiel einem Flachdach. Zusätzlich bezieht sich die Erfindung auf eine Anordnung bestehend aus einem solchen Träger und einem auf diesem montierten Solarpaneel.

Die europäische Patentveröffentlichung EP 0 857 926 A1 beschreibt ein Beispiel für einen bekannten Träger für ein Solarpaneel. Dieser Träger hat einen wannenförmigen oder kastenförmigen Aufbau mit einem flachen oberen Rand, der als Stützfläche für das Solarpaneel dient. In diesem Fall haben die Sotarpaneele einen Rahmen aus Aluminium, der sich um den Umfang des Paneels herum erstreckt. Das Solarpaneel wird an diesem Rahmen am oberen und unteren Rand des Trägers mittels Schrauben befestigt.

Die neue Generation von Solarpaneelen sind jedoch leichtere, dünnere Module, die ohne Metallrahmen hergestellt werden. Der Erfindung liegt daher die Aufgabe zugrunde, einen neuen Träger für Solarpaneele, insbesondere für dünnschichtige, rahmenlose Solarpaneele, zur Verfügung zu stellen, mit dem ein Solarpaneel auf einfache Weise positioniert und zuverlässig und sicher befestigt werden kann.

### Kurze Beschreibung der Erfindung

Diese Aufgabe wird durch einen Träger gemäß Anspruch 1 oder Anspruch 14 gelöst. Erfindungsgemäß wird eine aus einem solchen Träger und einem Solarpaneel bestehende Anordnung bereitgestellt. Bevorzugte Ausführungsformen der Erfindung ergeben sich aus den Merkmalen der abhängigen Ansprüche.

In einem Aspekt weist ein erfindungsgemäßer Träger zum Stützen bzw. Montieren eines Solarpaneels die folgenden Merkmale auf:
ein Unterteil zum Aufstellen auf einem Untergrund, insbesondere auf einem Dach, wie z. B. einem Flachdach,
mehrere Wände, die sich vom Unterteil nach oben erstrecken, an deren oberen, dem Unterteil entgegen gesetzten Seiten jeweils eine Stützfläche zum Auflegen des Solarpaneels vorgesehen ist, und

Befestigungsmittel zum Befestigen des Solarpaneels auf den Stützflächen, wobei die Befestigungsmittel das Solarpaneel gegen die Stützflächen klemmen.

Vorzugsweise erfolgt das Klemmen über mindestens die Hälfte, und bevorzugt mindestens ¾, eines länglichen Maßes eines seitlichen Randes des auf den Stützflächen aufliegenden Solarpaneels.

In einer bevorzugten Form der Erfindung umfassen die Befestigungsmittel mindestens eine Klemmschienen, die an einem seitlichen Rand des auf den Stützflächen aufliegenden Solarpaneels angebracht ist, und sich (bevorzugt durchgehend) über mindestens die Hälfte der länglichen Abmessung des seitlichen Randes des Solarpaneels erstreckt. Weiter bevorzugt umfassen die Befestigungsmittel mindestens zwei Klemmschienen, die sich durchgehend über mindestens die Hälfte der länglichen Abmessung zweier gegenüberliegender seitlicher Ränder des Solarpaneels erstrecken.

In einer bevorzugten Form der Erfindung erstrecken sich die Stützflächen im Wesentlichen in einer Ebene und durchgehend über mindestens die Hälfte, bevorzugt mindestens ¾ und weiter bevorzugt die Ganze, der länglichen Abmessung eines seitlichen Randes, bevorzugt zweier gegenüberliegender seitlicher Ränder des Solarpaneels.

Da die neuen Solarpaneele verhältnismäßig dünn sind (z. B. mit einer Wandstärke im Bereich von 6 bis 7 mm) und aus nur bedingt flexiblen, relativ leichten und daher empfindlichen Glasschichten bestehen, ist es wichtig, solche Solarpaneele so zuverlässig und sicher zu befestigen, wie möglich. Um dies zu erreichen, haben die Erfinder festgestellt, dass die seitlichen Ränder des Paneels durchgehend über mehr als die Hälfte ihrer Längen an den Stutzflächen flach aufliegen und daran geklemmt werden sollten. Mit dem Montagesystem der vorliegenden Erfindung ist es möglich, auf einen Metallrahmen für die Solarpaneele zu verzichten. Der Rahmen des Solarpaneels wird effektiv durch die Klemmschienen ersetzt, welche nicht nur zu einer vereinfachten und kostengünstigeren Herstellung der Paneele, sondern auch zu einer schnelleren und zuverlässigeren Montage der Paneele führen.

In einer bevorzugten Form der Erfindung weist jede Klemmschiene einen Abdeckungsteil auf, der direkt an dem seitlichen Rand des Solarpaneels angebracht ist, und einen Fixierungsteil, der sich außerhalb eines Umfangs des Solarpaneels erstreckt. Die Wände des Trägers weisen einen oberen Rand, z. B. in Form eines Flansches, an ihren oberen, dem Unterteil entgegengesetzten Seiten auf, welcher Rand bzw. Flansch die Stützflächen mindestens teilweise umfasst und die Klemmschiene(n) auch abstützt. Vorzugsweise verläuft der Rand bzw. Flansch um den oberen Umfang der Wände. Der obere Rand bzw. Flansch erstreckt sich bevorzugt außerhalb des Umfangs des auf den Stützflächen aufliegenden Solarpaneels und der Fixierungsteil der Klemmschiene(n) ist an dem Rand bzw. Flansch angebracht und fixiert.

In einer bevorzugten Form der Erfindung ist die mindestens eine Klemmschiene mit einer bzw. mehreren Schraube(n) fixiert. Die Befestigungsmittel umfassen außerdem Ansätze bzw. Buchsen zum Aufnehmen von Schrauben, welche Ansätze bzw. Buchsen sich an einer unteren Seite des oberen Randes bzw. Flansches befinden, und bevorzugt einstückig mit dem Rand bzw. Flansch und/oder mit den Wänden des Trägers geformt sind. Wenn die Ansätze bzw. Buchsen an die Schrauben richtig anpasst sind, können die Klemmschienen und damit auch das Solarpaneel durch ein einfaches Einschrauben auf dem Träger befestigt werden. Mit anderen Worten braucht ein Installateur keine Mutter für die Schrauben. Die Schrauben greifen in das Material der Ansätze bzw. Buchsen ein und schaffen damit eine feste Fixierung der Schiene an dem jeweiligen Flansch. Es werden bevorzugt zwei oder drei Schrauben pro Klemmschiene verwendet.

In einer bevorzugten Form der Erfindung weist die mindestens eine Klemmschiene ein nachgiebiges bzw. elastisches Element auf, welches den Klemmdruck abfedert und ihn über den seitlichen Rand des Solarpaneels verteilt. Das nachgiebige bzw. elastische Element befindet sich z. B. in dem Abdeckungsteil der mindestens einen Klemmschiene.

In einer bevorzugten Form der Erfindung besteht das Unterteil des Trägers hauptsächlich aus einem Boden, an dessen Umfang sich die Wände erheben, so dass der Boden und die Wände zusammen eine Kammer zum Aufnehmen von Ballast bilden und bevorzugt einen wannenförmigen bzw. kastenförmigen Aufbau des Trägers verschaffen. Durch das Anbringen von Ballast kann der Träger bzw. eine Anordnung bestehend aus Träger und Solarpaneel beschwert und damit stabilisiert werden. Die Ballastkammer kann mit losem geschütteten Ballast, wie etwa bereits auf einem Dach vorhandenen Kies, oder mit Steinen in ihrem Inneren gefüllt werden, um den Träger an seinem Platz zu halten.

Die Wände des Trägers umfassen vorzugsweise eine hohe hintere Wand, eine niedrige vordere Wand und zwei seitliche Wände, die miteinander verbunden sind und die Kammer seitlich umschließen. Der Rand bzw. der Flansch verläuft um den oberen Umfang der Wände. Die unterschiedlichen Höhen der hinteren und vorderen Wände des Trägers bestimmen eine schräge Haltung des auf den Stützflächen aufliegenden Solarpaneels bezüglich des Bodens bzw. der Dachebene. In einer bevorzugten Form der Erfindung steht das Solarpaneel unter einem Winkel von 10 bis 40 Grad bezüglich der Dachebene. Weiter bevorzugt steht das Solarpaneel unter einem Winkel von 10 bis 20 Grad bezüglich der Dachebene. Dieser Winkel wird für das individuelle Solarpaneel in Nordeuropa freilich nicht optimal sein, aber mehrere Träger können damit ohne gegenseitige Schattenwirkung dermaßen dicht hintereinander gesetzt werden, dass der Wirkungsgrad für ein vollständig besetztes Dach sehr zufriedenstellend ist. Die Wände und/oder der Boden sind bevorzugt mit parallel verlaufenden Vorsprüngen bzw. Rücksprüngen geformt, um eine stärkere und stabilere Struktur zu schaffen.

In einer bevorzugten Form der Erfindung umfasst der Träger eine zwischen den Wänden einsetzbare Versteifung, wobei die Wände Mittel zur Montage dieser Versteifung aufweisen. Die Versteifung ist bevorzugt als mindestens eine Strebe ausgebildet und die Mittel zur Montage der Versteifung können Ausnehmungen bzw. Aussparungen in den Wänden zum Anbringen bzw. Einsetzen der Strebe aufweisen. Diese Strebe wird vorzugsweise zwischen den hinteren und vorderen Wänden eingesetzt und ist besonders vorteilhaft in Gegenden, wo es schneien kann. Bei starkem Schneefall wird eine Anordnung aus Träger und Solarpaneel oft durch eine Ansammlung von Schnee und Eis schwer belastet, was bei herkömmlichen Trägern zur Verformung oder sogar zum Bruch der Anordnung führen kann. Eine zusätzliche Versteifung erhöht daher die Rigidität und damit die Stabilität der Anordnung in Gegenden, wo der Winter oft Schnee mit sich bringt. Diese Versteifung, z. B. in Form mindestens einer Strebe, wird vorzugsweise unterhalb des Solarpaneels eingesetzt und kann auch eine zusätzliche Stützfläche für das Paneel bieten.

In einem anderen Aspekt weist der erfindungsgemäße Träger zum Stützen bzw. Montieren eines Solarpaneels die folgenden Merkmale auf:
ein Unterteil zum Aufstellen auf einem Untergrund, insbesondere auf einem Dach, wie z. B. einem Flachdach,
mehrere Wände, die sich vom Unterteil nach oben erstrecken, an deren oberen, dem Unterteil entgegengesetzten Seiten jeweils eine Stützfläche zum Auflegen des Solarpaneels vorgesehen ist, und

Befestigungsmittel zum Befestigen des Solarpaneels auf den Stützflächen, wobei die Befestigungsmittel zum Klemmen das Solarpaneel gegen die Stützflächen geeignet sind.

Vorzugsweise weisen die Wände des Trägers Mittel zur Montage einer zwischen den Wänden einsetzbaren Versteifung auf. Wie oben schon erwähnt, ist die Versteifung bevorzugt als eine Strebe ausgebildet und die Montagemittel umfassen Ausnehmungen bzw. Aussparungen in den Wänden zum Anbringen bzw. Einsetzen der Strebe.

In einer bevorzugten Form der Erfindung umfassen die Stützflächen mindestens eine Seitenfläche, die eine Kante des Solarpaneels abstützt und einer Positionierung des Solarpaneels auf dem Träger dient. Vorzugsweise hat der Träger mindestens einen Anschlag auf bzw. an dem oberen Rand bzw. Flansch, welcher Anschlag die besagte Seitenfläche umfasst. Bevorzugt befindet sich der mindestens eine Anschlag am oberen Rand bzw. Flansch der vorderen Wand der Trägers.

In einer bevorzugten Form der Erfindung ist der Träger derart geformt, dass er durch ein Ineinanderschachteln auf einem identischen Träger gestapelt werden kann. Mehrere Träger können kompakt gestapelt transportiert werden, wenn der Träger dazu geformt ist, um durch Ineinanderschachteln auf einem gleichen bzw. identischen Träger gestapelt zu werden.

### Kurze Beschreibung der Zeichnungen

Weitere bevorzugte Ausgestaltungen der Erfindung ergeben sich aus der nachfolgenden Beschreibung von Ausführungsbeispielen, die unter Bezugnahme auf die beigefügten Figuren erfolgt, wobei einander funktionsgleiche oder funktionsähnliche Bauteile mit denselben Bezugszeichen gekennzeichnet sind. Es zeigt:
- Figuren 1 und 2: isometrische Vorderansicht und Rückansicht eines Trägers gemäß einem Ausführungsbeispiel der Erfindung, ohne Solarpaneel;
- Figuren 3 bis 3E: isometrische Ansichten von Details der Stützflächen und der Befestigungsmittel des in den Figuren 1 und 2 gezeigten Trägers;
- Figuren 4 bis 4A: Detailansichten des Montagesystems des in den Figuren 1 und 2 gezeigten Trägers, mit Solarpaneel;
- Figuren 5 bis 5F: isometrische Ansichten von Details der Ränder der vorderen und hinteren Wände des in den Figuren 1 und 2 gezeigten Trägers;
- Figuren 6 und 7: isometrische Vorderansichten eines Trägers gemäß einem Ausführungsbeispiel der Erfindung, mit und ohne Solarpaneel;
- Figuren 8 bis 8B: isometrische Ansichten von Details der Befestigungsmittel des in den Figuren 6 und 7 gezeigten Trägers.

### Beschreibung der Ausführungsbeispiele der Erfindung

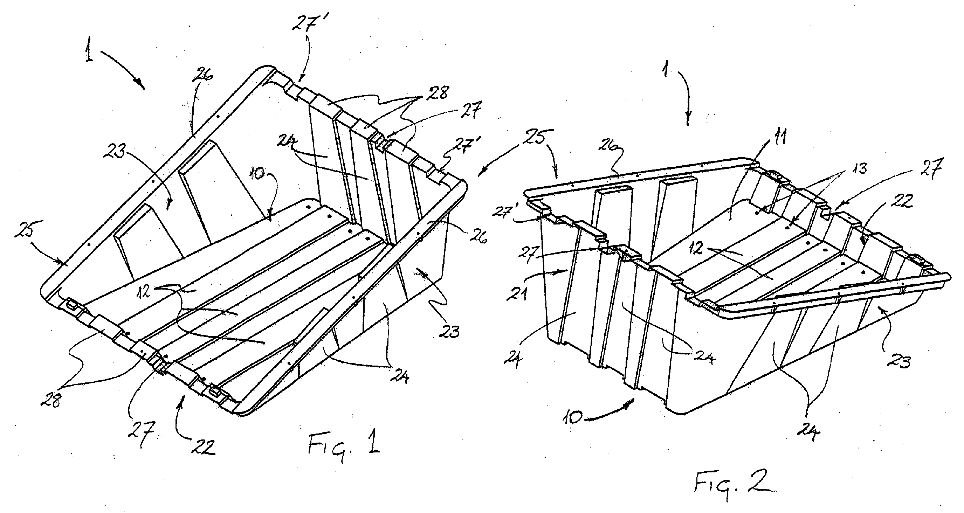

Mit Bezug auf die Figuren 1 bis 4A ist ein erfindungsgemäßer Träger 1 für ein Solarpaneel S dargestellt. Der Träger 1 umfasst ein Unterteil 10 zum Aufstellen des Trägers auf einem im Wesentlichen flachen Untergrund, und insbesondere auf einem Dach. Das Unterteil 10 besteht hauptsächlich aus einem Boden 11, der aus einer Platte und mit parallel verlaufenden Vorsprüngen bzw. Rücksprüngen 12 geformt ist. Die parallelen Vorsprünge bzw. Rücksprünge 12 bilden ein geripptes Bodenprofil und erhöhen damit die Biegefestigkeit und Stabilität des Bodens 11. Zwei Reihen von Löchern 13 durch die Bodenplatte 11 sind zum Abfluss von Regenwasser oder Feuchtigkeit vorgesehen.

Um den Umfang des Unterteils 10 herum erstrecken sich vier Wände 20, die zusammen mit dem Boden 11 dem Träger 1 einen wannenförmigen oder kastenförmigen Aufbau verleihen. Die vier Wände 20 umfassen eine hohe hintere Wand 21, eine niedrige vordere Wand 22 und zwei seitliche Wände 23, die miteinander verbunden sind und zusammen mit dem Boden 11 eine Kammer 30 zum Aufnehmen von Ballast bilden. Wie die Bodenplatte 11, besitzen die Wände 20 parallele Vorsprünge bzw. Rücksprünge 24, die als Verstärkungsrippen den Aufbau und das Profil des Trägers 1 steifer und stabiler machen. Diese Stabilität ist besonders vorteilhaft, wenn der Träger 1 höheren Lasten von Wind und Schnee ausgesetzt ist.

An einer oberen, dem Unterteil 10 entgegengesetzten Seite sind die Wände 20 durch einen oberen Rand 25 begrenzt, welcher Rand 25 Stützflächen zum Auflegen des Solarpaneels S umfasst. An jeder der beiden Seitenwände 23 ist der Rand 25 in Form eines Flansches ausgebildet und stellt eine durchgehend flache Stützfläche 26 dar, die sich über das ganze seitliche Maß des Trägers erstreckt. An den oberen Seiten der hinteren und vorderen Wände 21, 22 ist der Rand 25 durch Ausnehmungen oder Aussparungen 27, 27' uneben und nicht durchgehend flach. Jedoch besitzt sowohl der obere Rand 25 der hinteren Wand 21 als auch der obere Rand 25 der vorderen Wand 22 mehrere in derselben Ebene liegenden Stützflächen 28 für das Solarpaneel S. Mit anderen Worten wird das Solarpaneel S auf die Stützflächen 26, 28 aufgelegt und von diesen abgestützt.

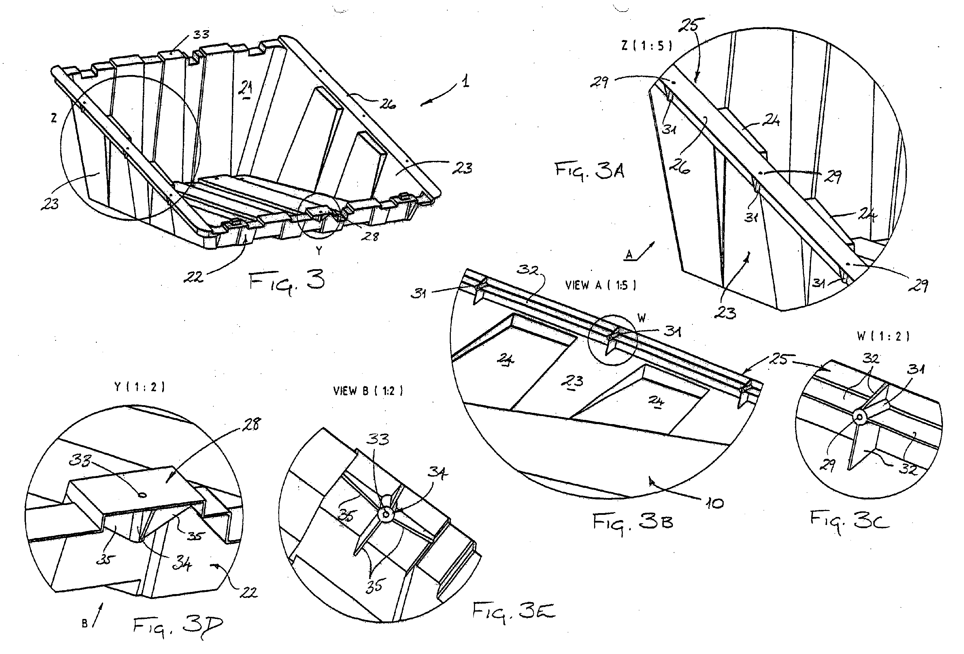

Mit Bezug nun auf die Figuren 3 bis 3C weisen die seitlichen Flansche 25 eine Reihe von in Abstand voneinander angeordneten Fixierungslöchern 29 auf, die als Befestigungsmittel zum Befestigen des Solarpaneels S dienen. Jedes dieser Fixierungslöcher 29 erstreckt sich durch den jeweiligen Flansch 25 und einen unterhalb des Flansches 25 geformten Ansatz 31, der als rohrförmige Buchse zum Aufnehmen einer Schraube dient. Die Unterseite des Flansches 25 und damit auch die Seiten der Ansätze 31 sind mit Verstärkungsstegen 32 versehen, um eine festere und stabilere Befestigungsstruktur zu verschaffen. Wie in den Figuren 3D und 3E zu sehen ist, haben die zentral gelegenen Stützflächen 28 der hinteren und vorderen Wände 21, 22 auch weitere Fixierungslöcher 33 mit rohrförmigen Ansätzen oder Buchsen 34, die auch über Verstärkungsstege 35 stabil mit dem oberen Rand 25 der vorderen und hinteren Wände 21, 22 geformt sind.

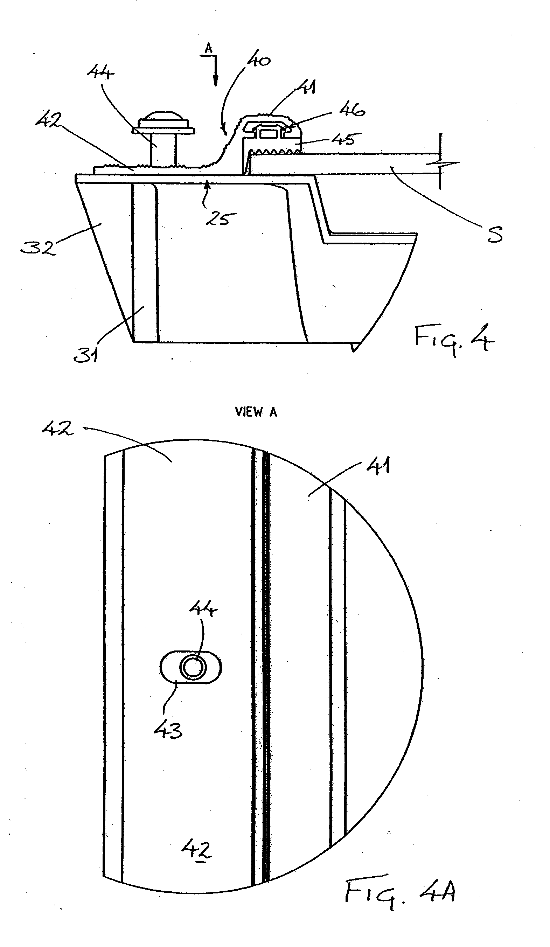

Die Montierung und Fixierung des Solarpaneels S wird in den Figuren 4 und 4A detailliert gezeigt. Die Befestigungsmittel zum Befestigen des Solarpaneels S auf dem Träger 1 weisen zwei seitliche Klemmschienen 40 auf, die zum Klemmen des Solarpaneels gegen die Stützflächen 26 der Flansche 25 geeignet sind. Jede Klemmschiene 40 umfasst einen Abdeckungsteil 41, der über eine seitliche Kante an einem Randbereich des auf den Stützflächen 26 aufliegenden Solarpaneels S angebracht wird, und einen Fixierungsteil 42, der sich über den Flansch 25 außerhalb des Umfangs des Solarpaneels S erstreckt. Wichtig ist, dass die Klemmschienen 40 durchgehend über mindestens die Hälfte und bevorzugt mindestens drei Viertel der länglichen Abmessung des seitlichen Randes des Solarpaneels S gegen die Stützflächen 26 der Flansche 25 aufspannen. Auf diese Weise wird das dünnschichtige Modul S stabil auf dem Träger 1 montiert.

Der Fixierungsteil 42 der Klemmschiene 40 ist mit Langlöchern 43 versehen, die mit den Fixierungslöchern 29 durch den Flansch 25 in Abstimmung gebracht werden können, so dass Schrauben 44 durch die Schiene 40 in die Ansätze 31 bzw. Buchsen eingeschraubt werden können, um die Schiene 40 und damit das Solarpaneel S in Position auf dem Träger 1 zu fixieren. Die Langlöcher 43 haben ein gewisses Spiel in seitlicher Richtung bezüglich der Löcher 29, um eine Justierung und präzise Positionierung der Klemmschienen 40 zu ermöglichen. Ferner besitzt jede Klemmschiene 40 ein nachgiebiges Element 45 aus einem relativ weichen, elastischen Stoff, wie z. B. Gummi o. a., welches Element 45 sich in einer Ausnehmung 46 an einer unteren Seite entlang des Abdeckungsteils 41 angeordnet ist. Das elastische Element 45 macht den klemmenden Kontakt mit dem oberen Randbereich des Solarpaneels S, federt den Klemmdruck ab und verteilt ihn entlang der seitlichen Kante des auf den seitlichen Stützflächen 26 aufliegenden Solarpaneels S.

Die neuen dünnschichtigen Solarpaneele bzw. Module sind rechteckig und haben eine typische Größe von etwa 1,1 m x 1,3 m. Diese Paneele bzw. Module werden normalerweise so ausgerichtet, dass sich die längeren Seiten (von 1,3 m) zwischen den hinteren und vorderen Wänden 21, 22 des Trägers erstrecken und auf den seitlichen Rändern bzw. Flanschen 25 abgestützt werden. Die Solarzellen in den Modulen sind derart angeordnet, dass ein Randbereich des Solarpaneels von etwa 5 bis 15 mm (z. B. 10 mm) keinen Strom erzeugt und sich damit für eine Befestigung mit den seitlichen Klemmschienen 40 sehr gut eignet. Mit anderen Worten kann die Abdeckungsteil 41 der Klemmschiene 40 diesen Randbereich problemlos abdecken.

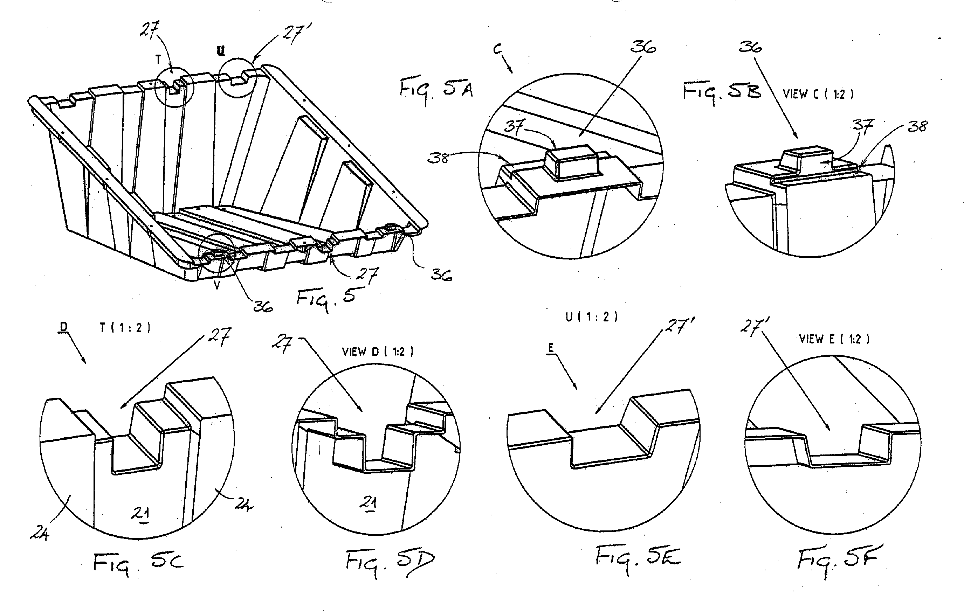

Mit Bezug nun auf die Figuren 5 bis 5F werden weitere Details von den vorderen und hinteren Wänden 21, 22 veranschaulicht. Die Figuren 5A und 5B zeigen z. B. Erhebungen 36 an den linken und rechten Seiten der vorderen Wand 22. Diese Erhebungen 36 bilden Anschläge, die einer stabilen Positionierung und Montierung des Solarpaneels S auf dem Träger dienen. Jeder Anschlag 36 weist eine hintere Seitenfläche 37 und eine untere Fläche 38 auf, die als weitere Stützflächen für die vordere bzw. untere Kante E des Solarpaneels S wirken. Die vordere bzw. untere Kante E des Solarpaneels S wird gegen die Seitenflächen 37 gestützt und zentriert auf dem Träger 1, wonach die Klemmschienen 40 an den Rändern des Paneels befestigt werden können. Die Seitenflächen 37 der Anschläge 36 funktionieren daher als Abrutschsicherung für das Solarpaneel S und die unteren Flächen 38 der Anschläge 36 liegen in einer Ebene mit den anderen Stützflächen 26, 28.

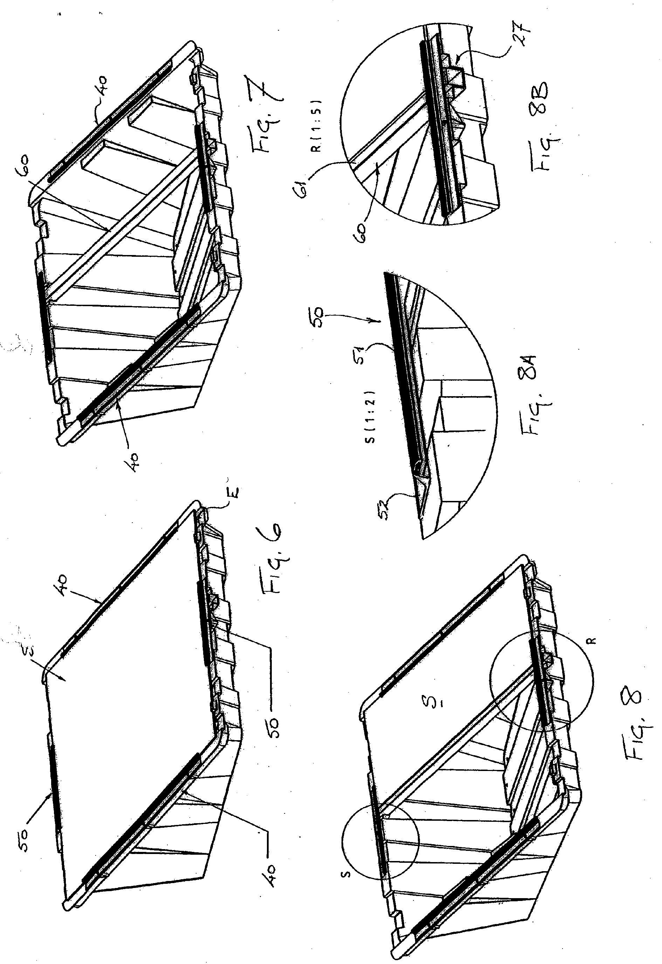

In den Figuren 5C und 5D wird eine von zwei gegenüberstehenden in den hinteren und vorderen Wänden geformten Aussparungen 27 in Nahaufnahme aus zwei Richtungen gezeigt. Jede dieser Aussparungen 27 dient als Mittel zur Montage einer Versteifung des Trägers; hierbei ist jede Aussparung 27 zum Aufnehmen eines jeweiligen Endes einer Versteifungsstrebe (nicht gezeigt) geeignet. Die Strebe wird derart in den Aussparungen 27 aufgenommen, dass sie sich zwischen den vorderen und hinteren Wänden 21, 22 erstreckt, und dass ihre obere Seite eine zusätzliche Stützfläche für das Solarpaneel S bildet. Die Strebe bewirkt eine Versteifung und Verstärkung des Trägers 1 in der Richtung zwischen den vorderen und hinteren Wänden. Eine solche Strebe wird in dem Ausführungsbeispiel der Figuren 6 bis 8B deutlicher dargestellt.

Die Figuren 5E und 5F zeigen eine andere Ausnehmung oder Ausklinkung 27' in der hinteren Wand 21 des Trägers. Zwei solcher Ausklinkungen 27' sind in der hinteren Wand als Kabeldurchführungen vorgesehen. Die Kabel, die die Solarzellen der Paneele oder der Module mit einem lokalen Stromverbraucher bzw. Verbrauchernetz oder mit einer Speicheranlage verbinden, können durch diese Ausklinkungen 27' und durch die Kammer 30 des Trägers 1 geführt werden.

Mit Bezug auf die Figuren 6 und 7 wird eine erfindungsgemäße Anordnung gezeigt, bestehend aus einem erfindungsgemäßen Träger 1 und einem darauf montierten Solarpaneel S. Die seitlichen Klemmschienen 40 sind deutlich zu erkennen. In diesem Ausführungsbeispiel gibt es jedoch weitere Klemmschienen 50 fixiert am oberen Rand 25 der vorderen und hinteren Wände 21, 22. Diese weitere Klemmschienen 50 sind in Nahaufnahme in den Figuren 8 bis 8B dargestellt. Die Form oder Konstruktion der Klemmschienen 50 entspricht jener der in den Figuren 4 und 4A gezeigten seitlichen Klemmschienen 40 und sie werden am hinteren und vorderen Rand des Trägers bzw. des Paneels fixiert. Das Loch 33 und der entsprechende Ansatz 34, die in den Figuren 3D und 3E gezeigt sind, können z. B. für diesen Zweck geeignet sein. Diese zusätzlichen Schienen 50 funktionieren als eine Windsogsicherung gegen die Saugkraft eines von Norden einfallenden Windes, der von hinten über den Träger und das darauf montierte Solarpaneel weht. In diesem Zusammenhang ist zu bemerken, dass auf der Nordhalbkugel die hohe Seite des Trägers 1 grundsätzlich nach Norden gerichtet ist, um das Solarpaneel zur Sonne auszurichten. Die Kammer 30 des kastenförmigen Trägers 1 wird mit Ballast gefüllt, um ihn an seinem Platz zu halten. Das kann z. B. bereits auf dem Dach vorhandener Kies sein, der ursprünglich auf dem Platz des Trägers lag, oder Pflastersteine, die zu diesem Zweck mit geliefert werden. Da das Solarpaneel S relativ dünn ist, könnte die Saugkraft des über den Träger wehenden Windes stark genug sein, um ein an seinem oberen Rand unbefestigtes Paneel stark zu verbiegen oder sogar vom Träger zu reißen. Die oberen und unteren Klemmschienen 50 dienen daher als eine Sicherung fürs Solarpaneel S gegen einen solchen Windsog.

In den Figuren 7 und 8 ist eine zwischen den vorderen und hinteren Wänden 21, 22 verlaufende Versteifungsstrebe 60 auch deutlich zu erkennen. Die jeweiligen Enden dieser Strebe 60 sind in den gegenüberstehenden Aussparungen 27 eingesetzt und die obere Seite 61 bildet eine zusätzliche Stützfläche für das Solarpaneel S. Die Strebe 60 bewirkt eine Versteifung und Verstärkung des Trägers 1, die die Belastbarkeit des Trägers im Schneefall erheblich verbessert.

Die Schrägstellung der Wände 20 des Trägers 1, die vom Boden 11 nach oben ragen, ist so festgelegt, dass der Träger 1 nach dem Vakuumformen oder Spritzprägen selbstlösend von dem Formwerkzeug ist. Durch diese Form sind mehrere Träger 1 in vertikaler Richtung ineinander schachtelbar, wodurch ein kompakter Stapel entsteht, der einfach zu transportieren ist. Diese ineinander schachtelbare Form des Trägers ist besonders wichtig, denn eine relative große Anzahl von Trägern und Solarpaneelen werden typischerweise auf einem einzigen Dach installiert, z. B. in direkt nebeneinander stehenden Reihen, die einen großen Teil der Dachfläche vollständig bedecken.

Der erfindungsgemäße Träger wird vorzugsweise aus einem Kunststoff, wie z. B. Polyurethan, Polyethylen o. a., in einem Spritzprägeverfahren hergestellt, obwohl ein Vakuumformung des Trägers auch möglich ist.

Zweck der vorhergehenden Beschreibung ist die Wirkungsweise bevorzugter Ausführungen der Erfindung zu illustrieren, und nicht der Umfang der Erfindung einzuschränken. Ausgehend von der vorhergehenden Erläuterung werden einem Fachmann viele Variationen deutlich sein, die vom Offenbarungsgehalt der vorliegenden Erfindung erfasst sind.

### Aspekte

1. Träger (1) zum Montieren eines Solarpaneels (S), mit
   einem Unterteil (10) zum Aufstellen auf einem im Wesentlichen flachen Untergrund, insbesondere auf einem Dach,
   mehreren Wänden (20), die sich vom Unterteil (10) nach oben erstrecken, an deren oberen, dem Unterteil entgegengesetzten Seiten mehrere Stützflächen (26, 28) zum Auflegen des Solarpaneels (S) vorgesehen sind, und
   Befestigungsmitteln (33, 40) zum Befestigen des Solarpaneels auf den Stützflächen, wobei die Befestigungsmittel das Solarpaneel (S) gegen die Stützflächen (26, 28) klemmen,
   wobei das Klemmen über mindestens die Hälfte, bevorzugt mindestens drei Viertel, einer länglichen Abmessung eines seitlichen Randes des auf den Stützflächen (26) aufliegenden Solarpaneels (S) erfolgt.
2. Träger (1) nach Aspekt 1, wobei die Befestigungsmittel (33, 40) mindestens eine Klemmschiene (40) umfassen, die an einem seitlichen Rand des auf den Stützflächen (26, 28) aufliegenden Solarpaneels (S) angebracht ist, und sich über mindestens die Hälfte, bevorzugt mindestens drei Viertel, der länglichen Abmessung des seitlichen Randes des Solarpaneels erstreckt.
3. Träger (1) nach einem der vorhergehenden Aspekte, wobei die Befestigungsmittel (33, 40) mindestens zwei Klemmschienen (40) umfassen, die sich über mindestens die Hälfte, bevorzugt mindestens drei Viertel, der länglichen Abmessung zweier gegenüberliegender seitlicher Ränder des Solarpaneels (S) erstrecken.
4. Träger nach Aspekt 2 oder 3, wobei jede Klemmschiene (40) einen Abdeckungsteil (41) aufweist, der direkt über den seitlichen Rand des Solarpaneels (S) angebracht ist, und einen Fixierungsteil (42), der sich außerhalb eines Umfangs des Solarpaneels (S) erstreckt.
5. Träger nach Aspekt 4, wobei der Abdeckungsteil (41) eine Breite im Bereich von 5 mm bis15 mm, bevorzugt von 8 mm bis 12 mm, hat und wobei der Fixierungsteil (42) eine Breite im Bereich von 10 mm bis 25 mm, bevorzugt 15 mm bis 20 mm hat.
6. Träger (1) nach einem der vorhergehenden Aspekte, wobei die Wände (20) des Trägers einen Rand bzw. Flansch (25) an ihren oberen, dem Unterteil entgegengesetzten Seiten aufweisen, welcher Rand bzw. Flansch (25) die Stützflächen (26, 28) umfasst und die mindestens eine Klemmschiene (40) abstützt.
7. Träger (1) nach Aspekt 6, wobei sich der Rand bzw. Flansch (25) außerhalb des Umfangs des auf den Stützflächen (26, 28) aufliegenden Solarpaneels (S) erstreckt, und wobei der Fixierungsteil (42) der mindestens einen Klemmschiene (40) an dem Rand bzw. Flansch (25) angebracht und fixiert ist.
8. Träger (1) nach Aspekt 7, wobei die mindestens eine Klemmschiene (40) mit Schrauben (44) fixiert ist, und wobei die Befestigungsmittel Ansätze bzw.
   Buchsen (31) zum Aufnehmen von Schrauben umfassen, welche Ansätze bzw. Buchsen (31) sich an einer unteren Seite des Randes bzw. Flansches (25) befinden, und bevorzugt einstückig mit dem Rand bzw. Flansch (25) und/oder mit den Wänden (20) geformt sind.
9. Träger (1) nach einem der vorhergehenden Aspekte, wobei die mindestens eine Klemmschiene (40) ein nachgiebiges bzw. elastisches Element (45) umfasst, welches den Klemmdruck abfedert und ihn über den seitlichen Rand
10. Träger (1) nach Aspekt 9, wobei sich das nachgiebige bzw. elastische Element (45) in dem Abdeckungsteil (42) der mindestens einen Klemmschiene (40) befindet, und wobei das nachgiebige bzw. elastische Element (45) bevorzugt eine längliche Form hat und sich entlang der Klemmschienen erstreckt.
11. Träger (1) nach einem der vorhergehenden Aspekte, ferner umfassend eine zwischen den Wänden (20) des Trägers einsetzbare Versteifung (60), wobei die Wände (20) Mittel zur Montage der Versteifung (60) aufweisen.
12. Träger (1) nach Aspekt 11, wobei die Versteifung (60) als eine Strebe ausgebildet ist, und die Montagemittel Ausnehmungen bzw. Aussparungen (26) in den Wänden zum Anbringen bzw. Einsetzen der Strebe aufweist.
13. Träger (1) nach einem der vorhergehenden Aspekte, wobei die Stützflächen (26, 28) mindestens eine Seitenfläche (37) umfasst, die eine Kante (E) des Solarpaneels (S) abstützt und einer Positionierung des Solarpaneels (S) auf dem Träger dient.
14. Träger (1) nach einem der vorhergehenden Aspekte, wobei mindestens ein Anschlag (36) auf oder an dem Rand bzw. Flansch (25) geformt ist, und wobei der Anschlag (36) die Seitenfläche (37) umfasst.
15. Träger (1) zum Montieren eines Solarpaneels (S), mit
   einem Unterteil (10) zum Aufstellen auf einem im Wesentlichen flachen Untergrund, insbesondere auf einem Dach,
   mehreren Wänden (20), die sich vom Unterteil (10) nach oben erstrecken, an deren oberen, dem Unterteil entgegengesetzten Seiten mehrere Stützflächen (26, 28) zum Auflegen des Solarpaneels (S) vorgesehen sind, und
   Befestigungsmitteln (33, 40) zum Befestigen des Solarpaneels auf den Stützflächen, wobei die Befestigungsmittel zum Klemmen das Solarpaneel (S) gegen die Stützflächen (26, 28) geeignet sind,
   wobei die Wände (20) des Trägers (1) Mittel zur Montage einer zwischen den Wänden (20) einsetzbaren Versteifung (60) aufweisen.
16. Anordnung bestehend aus einem Träger (1) nach einem der vorhergehenden Aspekte und einem Solarpaneel (S).

## Patentansprüche

1. Träger (1) zum Montieren eines Solarpaneels (S), mit
einem Unterteil (10) zum Aufstellen auf einem im Wesentlichen flachen Untergrund, insbesondere auf einem Dach,
mehreren Wänden (20), die sich vom Unterteil (10) nach oben erstrecken, an deren oberen, dem Unterteil entgegengesetzten Seiten mehrere Stützflächen (26, 28) zum Auflegen des Solarpaneels (S) vorgesehen sind, und
Befestigungsmitteln (33, 40) zum Befestigen des Solarpaneels auf den Stützflächen, wobei die Befestigungsmittel das Solarpaneel (S) gegen die Stützflächen (26, 28) klemmen,
wobei das Klemmen über mindestens die Hälfte, bevorzugt mindestens drei Viertel, einer länglichen Abmessung eines seitlichen Randes des auf den Stützflächen (26) aufliegenden Solarpaneels (S) erfolgt.

2. Träger (1) nach Anspruch 1, wobei die Befestigungsmittel (33, 40) mindestens eine Klemmschiene (40) umfassen, die an einem seitlichen Rand des auf den Stützflächen (26, 28) aufliegenden Solarpaneels (S) angebracht ist, und sich über mindestens die Hälfte, bevorzugt mindestens drei Viertel, der länglichen Abmessung des seitlichen Randes des Solarpaneels erstreckt.

3. Träger (1) nach einem der vorhergehenden Ansprüche, wobei die Befestigungsmittel (33, 40) mindestens zwei Klemmschienen (40) umfassen, die sich über mindestens die Hälfte, bevorzugt mindestens drei Viertel, der länglichen Abmessung zweier gegenüberliegender seitlicher Ränder des Solarpaneels (S) erstrecken.

4. Träger nach Anspruch 2 oder 3, wobei jede Klemmschiene (40) einen Abdeckungsteil (41) aufweist, der direkt über den seitlichen Rand des Solarpaneels (S) angebracht ist, und einen Fixierungsteil (42), der sich außerhalb eines Umfangs des Solarpaneels (S) erstreckt.

5. Träger nach Anspruch 4, wobei der Abdeckungsteil (41) eine Breite im Bereich von 5 mm bis15 mm, bevorzugt von 8 mm bis 12 mm, hat und wobei der Fixierungsteil (42) eine Breite im Bereich von 10 mm bis 25 mm, bevorzugt 15 mm bis 20 mm hat.

6. Träger (1) nach einem der vorhergehenden Ansprüche, wobei die Wände (20) des Trägers einen Rand bzw. Flansch (25) an ihren oberen, dem Unterteil entgegengesetzten Seiten aufweisen, welcher Rand bzw. Flansch (25) die Stützflächen (26, 28) umfasst und die mindestens eine Klemmschiene (40) abstützt.

7. Träger (1) nach Anspruch 6, wobei sich der Rand bzw. Flansch (25) außerhalb des Umfangs des auf den Stützflächen (26, 28) aufliegenden Solarpaneels (S) erstreckt, und wobei der Fixierungsteil (42) der mindestens einen Klemmschiene (40) an dem Rand bzw. Flansch (25) angebracht und fixiert ist.

8. Träger (1) nach Anspruch 7, wobei die mindestens eine Klemmschiene (40) mit Schrauben (44) fixiert ist, und wobei die Befestigungsmittel Ansätze bzw. Buchsen (31) zum Aufnehmen von Schrauben umfassen, welche Ansätze bzw. Buchsen (31) sich an einer unteren Seite des Randes bzw. Flansches (25) befinden, und bevorzugt einstückig mit dem Rand bzw. Flansch (25) und/oder mit den Wänden (20) geformt sind.

9. Träger (1) nach einem der vorhergehenden Ansprüche, wobei die mindestens eine Klemmschiene (40) ein nachgiebiges bzw. elastisches Element (45) umfasst, welches den Klemmdruck abfedert und ihn über den seitlichen Rand des Solarpaneels verteilt.

10. Träger (1) nach Anspruch 9, wobei sich das nachgiebige bzw. elastische Element (45) in dem Abdeckungsteil (42) der mindestens einen Klemmschiene (40) befindet, und wobei das nachgiebige bzw. elastische Element (45) bevorzugt eine längliche Form hat und sich entlang der Klemmschienen erstreckt.

11. Träger (1) nach einem der vorhergehenden Ansprüche, ferner umfassend eine zwischen den Wänden (20) des Trägers einsetzbare Versteifung (60), wobei die Wände (20) Mittel zur Montage der Versteifung (60) aufweisen.

12. Träger (1) nach Anspruch 11, wobei die Versteifung (60) als eine Strebe ausgebildet ist, und die Montagemittel Ausnehmungen bzw. Aussparungen (26) in den Wänden zum Anbringen bzw. Einsetzen der Strebe aufweist.

13. Träger (1) nach einem der vorhergehenden Ansprüche, wobei die Stützflächen (26, 28) mindestens eine Seitenfläche (37) umfasst, die eine Kante (E) des Solarpaneels (S) abstützt und einer Positionierung des Solarpaneels (S) auf dem Träger dient.

14. Träger (1) nach einem der vorhergehenden Ansprüche, wobei mindestens ein Anschlag (36) auf oder an dem Rand bzw. Flansch (25) geformt ist, und wobei der Anschlag (36) die Seitenfläche (37) umfasst.

15. Träger (1) zum Montieren eines Solarpaneels (S), mit
einem Unterteil (10) zum Aufstellen auf einem im Wesentlichen flachen Untergrund, insbesondere auf einem Dach,
mehreren Wänden (20), die sich vom Unterteil (10) nach oben erstrecken, an deren oberen, dem Unterteil entgegengesetzten Seiten mehrere Stützflächen (26, 28) zum Auflegen des Solarpaneels (S) vorgesehen sind, und
Befestigungsmitteln (33, 40) zum Befestigen des Solarpaneels auf den Stützflächen, wobei die Befestigungsmittel zum Klemmen das Solarpaneel (S) gegen die Stützflächen (26, 28) geeignet sind,
wobei die Wände (20) des Trägers (1) Mittel zur Montage einer zwischen den Wänden (20) einsetzbaren Versteifung (60) aufweisen.

16. Anordnung bestehend aus einem Träger (1) nach einem der vorhergehenden Ansprüche und einem Solarpaneel (S).
